# EUROPEAN PATENT APPLICATION

(11) **EP 1 813 664 A1**
(43) Date of publication of application: **01.08.2007**
(21) Application number: 05778607.1
(22) Date of filing: 08.09.2005
(51) Int. Cl.: C11B 1/10

(54) **PROCESS FOR PRODUCING OIL CONTAINING VEGETABLE GLYCOSPHINGOLIPID**

(30) Priority: 30.09.2004 JP 2004288228
(71) Applicant: Sapporo Breweries Limited, Tokyo 150-8522 (JP)
(72) Inventor: KURIHARA, Toshio, Sapporo Breweries Limited, Yaizu-shi, Shizuoka 4250013 (JP)
(74) Representative: Vossius & Partner
(86) International application number: PCT/JP2005/016498
(87) International publication number: WO 2006/038422

(57) **Abstract**

A method for efficiently manufacturing a vegetable glycosphingolipid having reduced unpleasant odor using a barley-derived starting material is provided. The method for manufacturing a vegetable glycosphingolipid according to the present invention comprises an extraction step (2) for preparing a mixture with a non-halogenated alcohol-based solvent and heating the starting material mixture, and a fatty acid removal step (3) for removing fatty acids from the extract obtained in the extraction step (2).

## Description

### TECHNICAL FIELD

The present invention relates to a method for manufacturing a vegetable oil that contains a glycosphingolipid from a barley-derived starting material.

### BACKGROUND ART

Animal oils or vegetable oils have been used since ancient times in various products that include foods and cosmetics as well as drugs. Specifically, these animal and vegetable oils have been used as solvents, dispersing agents, and the like for foods, cosmetics, and the like, or to improve the physical properties of foods, cosmetics, or the like because of the distinctive properties, namely that these animal and vegetable oils are a highly viscous liquid at normal temperature.

The applications of a glycosphingolipid found in animal and vegetable oils to foods or cosmetics have been emphasized in recent years. For example, ceramides (in general, substances having a structure in which a sphingosine base having a long-chain aminopolyol structure is amide-bonded with a long-chain fatty acid) and cerebrosides (substances having a structure in which glucose, galactose, or another sugar is bonded to a ceramide) are highly valued for their effect as active ingredients in cosmetics or foods for improving the moisture retention properties of skin.

Animal-derived versions of these types of glycosphingolipids have been manufactured in the past primarily from cow brains. However, due to concerns regarding the problems of so-called bovine spongiform encephalopathy, a safer supply source is needed as a substitute for cow brains.

A ceramide having a known structure, for example, is therefore commercially available as an artificially synthesized product. However, the chemicals used in the synthesis process, the by-products generated by the synthesis process, and the like have not yet been proven safe. The synthesized product must therefore be purified to a high degree, which increases its cost. There are also indications that the synthesized product is inferior to a natural ceramide with regard to the effect of the product in a cosmetic or food product.

However, as shown in Non-patent Reference 1, for example, methods for manufacturing a glycosphingolipid from rice and other plant starting materials have been reported. This vegetable glycosphingolipid is free of the drawbacks that occur in the abovementioned animal-derived glycosphingolipids, and contains natural ceramides and the like. The effectiveness of this vegetable material as a cosmetic or food product is therefore emphasized.

[Non-patent Reference 1]:Y. Fujino et al., Agric. Biol. Chem., 49(2), 2753-2762, (1985).

### DISCLOSURE OF THE INVENTION

### Problems to Be Solved by the Invention

However, the amount in which, for example, glycosphingolipids are contained in the plant starting material is inherently very low, and the plant starting material contains large amounts of fatty acids. Therefore, the abovementioned conventional methods for manufacturing an oil that contains a vegetable glycosphingolipid include complicated processes that are laborious and costly.

In the abovementioned conventional manufacturing methods, the decomposition of phospholipids contained in the plant starting material, or the oxidation of unsaturated fatty acids and the like that occurs in the long and complicated processes, gives the resulting glycosphingolipid-containing vegetable oil an unpleasant odor, making the product unsuitable as a cosmetic or food product.

A method was also needed for effectively utilizing the large amounts of barley bran discharged in the barley milling process that is part of the brewing process for beer, sparkling liquor, or the like.

The present invention was developed in view of such drawbacks as those described above, and one of the objects of the present invention is to provide a method for efficiently manufacturing a vegetable glycosphingolipid having reduced unpleasant odor using a barley-derived starting material.

### Means for Solving the Problem

In order to overcome the abovementioned drawbacks, the method for manufacturing a vegetable glycosphingolipid-containing oil according to an embodiment of the present invention is characterized in comprising an extraction step for mixing a barley-derived starting material with a non-halogenated alcohol-based solvent and heating the starting material mixture, and a fatty acid removal step for removing fatty acids from an extract obtained in the extraction step.

### Effect of the Invention

According to the present invention, a method can be provided for manufacturing a vegetable glycosphingolipid having reduced unpleasant odor using a barley-derived starting material.

### BRIEF DESCRIPTION OF THE DRAWINGS

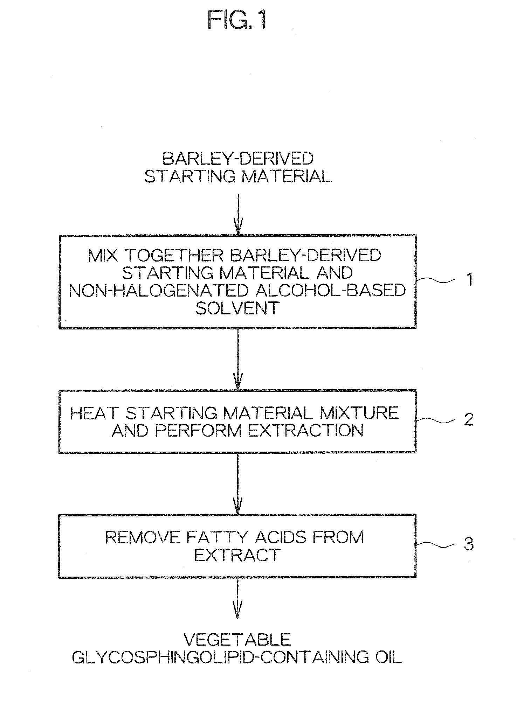

FIG. 1 is a diagram showing the main steps involved in the method for manufacturing a vegetable glycosphingolipid-containing oil according to an embodiment of the present invention.

### BEST MODE FOR CARRYING OUT THE INVENTION

The method for manufacturing a vegetable glycosphingolipid-containing oil (hereinafter referred to as "the present manufacturing method") according to an embodiment of the present invention will be described hereinafter. The main steps of the present manufacturing method are shown in FIG. 1. As shown in FIG. 1, the present manufacturing method includes a mixing step 1 for mixing a barley-derived starting material with a non-halogenated alcohol-based solvent, an extraction step 2 for heating the starting material mixture that was mixed in the mixing step 1, and a fatty acid removal step 3 for removing fatty acids from the extract obtained in the extraction step 2. These steps will be described in sequence hereinafter.

In the present embodiment, an example is described in which barley bran that includes barley epidermis is used as the barley-derived starting material. This barley bran is separated/extracted in large quantities by the milling process for removing the epidermis of barley used for brewing in the process of brewing beer, sparkling liquor, or the like. In the present manufacturing method, the raw barley bran obtained in this manner can be used without modification as a barley-derived starting material. Domestic products that can be used as this barley for brewing include Haruna Nijo, Ryofu, and Sakitama Nijo, for example, and examples of foreign products that can be used include Barke, Gairdner, Kendall, and the like.

In the mixing step 1 shown in FIG. 1, barley bran is mixed with a non-halogenated alcohol-based solvent. Examples of non-halogenated alcohol-based solvents that may be used herein include methanol, ethanol, propanol, isopropanol, butanol, and other alcohol-based solvents that can be mixed with water.

Specifically, the non-halogenated solvent that is mixed with the barley bran herein is preferably an appropriate combination (mixed in an appropriate mixture ratio) of at least one of the group of alcohol-based solvents described above with at least one of the group of non-halogenated organic solvents that includes hexane, acetone, cyclohexane, pentane, heptane, petroleum ether, dioxane, tetrahydrofuran (THF), dimethylformamide (DMF), dimethoxyethane (DME), acetonitrile, and the like. A solvent mixture of isopropanol and hexane is particularly suitable.

By using this type of non-halogenated solvent as the extraction solvent, the cost of manufacturing with the present manufacturing method can be reduced, and the safety of the vegetable glycosphingolipid-containing oil obtained by the present manufacturing method as a cosmetic and food material can be ensured.

The amount of the non-halogenated alcohol-based solvent that is mixed with the barley bran is not particularly limited. When mixing is performed in a prescribed vessel, for example, there is no need to stir the barley bran and the extraction solvent, and it is therefore sufficient to use at least an adequate amount of the solvent to immerse the entire amount of barley bran in the vessel.

In the extraction step 2 shown in FIG. 1, the starting material mixture that includes the barley bran and non-halogenated solvent mixed in the mixing step 1 is then heat-treated. Specifically, when the extraction step 2 is performed in a sealable pressure-resistant vessel, for example, the extraction step 2 includes a step for heating the starting material mixture obtained in mixing step 1 in the vessel, and maintaining a prescribed temperature range for a prescribed period of time.

The heating temperature in the extraction step 2 is preferably in the range of 80°C to 160°C, and a temperature range of 100°C to 130°C is particularly suitable. The reason for this is that a long time is required to extract the vegetable glycosphingolipid and the like when the heating temperature is 80°C or below, and that lipid components included in the barley bran decompose, the decomposition products are extracted in large quantities as impurities, and the manufacture of the vegetable glycosphingolipid is difficult when the heating temperature is 160°C or above.

This extraction step 2 makes it possible to efficiently obtain an extract that includes phospholipids, fatty acids (including oils and fats that are saturated fatty acids, unsaturated fatty acids, and glycerin esters of saturated and unsaturated fatty acids), the vegetable glycosphingolipid included in the barley bran, and the like, in an extremely short time.

This extract is obtained from the starting material mixture heat-treated in extraction step 2 by purging with an inert gas, or separation using a press filter, a cylinder press, a screw decanter, or the like, for example, and then condensing the product according to a condensation process such as vacuum condensation using a rotary evaporator, for example.

In the fatty acid removal step 3 shown in FIG. 1, fatty acids are then removed from the extract by using a solvent to treat the extract obtained in the extraction step 2. Specifically, the fatty acid removal step 3 includes a step for mixing the extract with a non-halogenated solvent as a solvent for fatty acid removal, transferring the fatty acids included in the extract to the non-halogenated solvent phase, and removing the non-halogenated solvent phase.

When manufacturing cost and utilization in a cosmetic product, a food product, or the like, for example, are considered, a solvent that includes hexane, acetone, or the like is suitable for use as the non-halogenated solvent used in the fatty acid removal step 3. In this case, the fatty acid removal step 3 includes, for example, a step for mixing the extract with hexane and performing a thermal reflux treatment on the mixture under prescribed conditions.

The fatty acid removal step 3 may include a step for cooling and separating the product after the extract obtained in the extraction step 2 is treated with a solvent. In this case, the fatty acid removal step 3 includes, for example, a step in which a mixture of the extract and hexane is heated and refluxed, after which the mixture is cooled to about -20°C to precipitate barley oil that is insoluble in hexane. Specifically, in this cooling step, the cooled insoluble substance (precipitate) can be separated to obtain the vegetable glycosphingolipid-containing oil.

Since fatty acids derived from barley bran that exist in large quantities in the extract obtained in extraction step 2 can be removed in the fatty acid removal step 3, a vegetable glycosphingolipid-containing oil can be obtained that includes a high concentration of the natural vegetable glycosphingolipids found in barley bran.

According to the present manufacturing method, a vegetable glycosphingolipid and the like can be extracted from barley bran in an extremely short time in the extraction step 2, and fatty acids included in large quantities in the extract can be efficiently removed in the fatty acid removal step 3. Therefore, a vegetable oil that includes a high concentration of a vegetable glycosphingolipid normally found in minute quantities in barley bran can be obtained efficiently, conveniently, and at low cost.

In the present manufacturing method, a non-halogenated solvent is used as the extraction solvent in the mixing step 1 and the fatty acid removal solvent in the fatty acid removal step 3. Therefore, a glycosphingolipid-containing oil can be obtained that is highly safe for use in cosmetics, food products, and the like.

In the present manufacturing method, the extraction step 2 and the fatty acid removal step 3 described above may be performed in the presence of an inert gas. Specifically, the present manufacturing method in this case includes a gas phase substitution step in which the gas phase in contact with the starting material mixture of barley bran and a non-halogenated solvent is substituted for an inert gas between the mixing step 1 and the extraction step 2 shown in FIG. 1. In this gas phase substitution step, nitrogen, argon, or another inert gas is substituted for the gas phase component (air, for example) that occupies the space other than the space occupied by the starting material mixture placed in a sealable vessel, for example.

The abovementioned extraction step 2 is then performed in the presence of this inert gas. In the fatty acid removal step 3 as well, the gas phase in contact with the mixture of a non-halogenated solvent and the extract obtained in the extraction step 2 is substituted with an inert gas, and the fatty acid removal process described above is performed in the presence of the inert gas. The mixing step 1 shown in FIG. 1 may also be performed in the presence of an inert gas.

Performing at least the extraction step 2 and the fatty acid removal step 3 in the presence of an inert gas makes it possible to adequately reduce oxidation of phospholipids, fatty acids, and other sources of unpleasant odor that are included in the barley bran. The occurrence of unpleasant odor in the resulting vegetable glycosphingolipid-containing oil can therefore be more effectively prevented.

The prevention of unpleasant odor is particularly important when the vegetable glycosphingolipid-containing oil is utilized as a cosmetic product, food product, or the like. When the vegetable glycosphingolipid-containing oil obtained by the present manufacturing method also includes a phospholipid, this phospholipid in which sources of unpleasant odor are effectively reduced may also be used as an active ingredient in cosmetic products and the like.

Specific working examples of the present manufacturing method will be described hereinafter.

### (Working Example 1)

Barley bran including barley epidermis discharged during milling of Hokkaido Ryofu brewing barley was used as the barley-derived starting material. Thermal extraction involving pressurization was performed using an accelerated solvent extraction (ASE) method. In this accelerated solvent extraction method, a Dionex ASE-200 (manufactured by Dionex Corporation) accelerated solvent extraction device was used as the extraction device. Specifically, 150 g of barley bran including barley epidermis was packed into 10 stainless steel cells having a volume of 22 mL, a solvent mixture in which hexane and isopropanol were mixed in a volume ratio of 3:2 was added, and the cells were set in the accelerated extraction device. Heat extraction was then performed under conditions of an oven temperature of 125°C, an oven temperature increase time of 6 minutes, a standing time of 25 minutes at the set temperature/pressure, a flush volume of 60%, a nitrogen gas purge time of 60 seconds, and two standing cycles. The extract obtained by the heat extraction process was recovered and vacuum condensed using an evaporator, whereby 22.5 g of yellowish-brown viscous barley oil containing a vegetable glycosphingolipid was obtained. The amount of monoglucosylceramide included in this oily barley oil was 800 mg.

The determination of the quantity of monoglucosylceramide as a component of the glycosphingolipid will next be described. In this quantitative determination method, monoglucosylceramide extracted from wheat according to the method of Fuj ino et al. (Agric. Biol. Chem., 49(9), 2753, (1985)) was used as a standard preparation. This standard preparation may also include an oligomer in which two or three glucoses are bonded per molecule. This standard preparation and a sample (the abovementioned barley oil, for example) were charged into a silica gel plate (Kieselgel 60F254) manufactured by Merk Co., and thin-layer chromatography (TLC) was developed in a mixed solvent system in which chloroform, methanol, and water were mixed in a volume ratio of 65:16:2. After this TLC development, the product was sprayed with a 50% solution of sulfuric acid and heated for 10 minutes at 80°C to 120°C, and the intensity of coloration was measured using a densitometer (Chromat Scanner CS-930; Shimadzu Corporation) to determine a quantity. Specifically, since colors corresponding to each saccharide and constituent sugar are generated in this method by spraying anisaldehyde-sulfuric acid as a coloring reagent and heating the product to 80 to 120°C, a visual determination can easily be made. Specifically, since galactose produces green, glucose produces deep blue, and lactose produces dark green, the quantities of these sugar components can be determined by the differences in color (wavelength) and intensity of these colors.

### (Working Example 2)

Barley bran including barley epidermis discharged during milling of Hokkaido Ryofu brewing barley was used as the barley-derived starting material, and the same type of Dionex accelerated solvent extraction device ASE-200 (manufactured by Dionex Corporation) as the one used in Working Example 1 was used. Specifically, 150 g of barley bran including barley epidermis was packed into 10 stainless steel cells having a volume of 22 mL, a solvent mixture in which hexane and isopropanol were mixed in a volume ratio of 3:2 was added, and the cells were set in the accelerated extraction device. Heat extraction was then performed under conditions of an oven temperature of 155°C, an oven temperature increase time of 6 minutes, a standing time of 45 minutes at the set temperature/pressure, a flush volume of 60%, a nitrogen gas purge time of 60 seconds, and two standing cycles. The extract obtained by the heat extraction process was recovered and vacuum condensed using an evaporator, whereby 20.8 g of yellowish-brown viscous barley oil containing a vegetable glycosphingolipid was obtained.

### (Working Example 3)

An amount of 145 g of barley bran of Hokkaido Ryofu brewing barley as the barley-derived starting material was packed into 10 stainless steel cells having a volume of 22 mL, a solvent mixture in which hexane and isopropanol were mixed in a volume ratio of 3 :2 was added, and the cells were set in a Dionex accelerated solvent extraction device ASE-200 (manufactured by Dionex Corporation). Heat extraction was then performed under conditions of an oven temperature of 100°C, an oven temperature increase time of 6 minutes, a standing time of 15 minutes at the set temperature/pressure, a flush volume of 60%, a nitrogen gas purge time of 60 seconds, and two standing cycles. The extract obtained by the heat extraction process was recovered and vacuum condensed using an evaporator, whereby 24.5 g of yellowish-brown viscous barley oil containing a vegetable glycosphingolipid was obtained.

### (Working Example 4)

An amount of 250 g of non-ground brewing barley (Hokkaido Ryofu) as the barley-derived starting material was divided amongst and placed without modification into 10 stainless steel cells having a volume of 22 mL the same as in Working Example 1, and heat extraction was performed using the same solvent and conditions as in Working Example 1. An organic solvent in which hexane and isopropanol were mixed together was then vacuum-condensed in the same manner as in Working Example 1, whereby 20.0 g of yellowish-brown viscous barley oil containing a vegetable glycosphingolipid was obtained.

### (Working Example 5)

An amount of 20 g of the barley oil containing the vegetable glycosphingolipid obtained in Working Example 1 was placed in a 500 mL two-mouthed recovery flask equipped with a cooling tube, and 200 mL of hexane was added. The mixture of barley oil and hexane was refluxed for two hours while being stirred on an oil bath at a temperature of 80°C to 90°C in a stream of nitrogen gas. The refluxed mixture was cooled, then removed from the oil bath, and cooled to -20°C by a cooled block of ice, whereupon a yellowish-brown oily substance insoluble in hexane was precipitated at the bottom of the flask. The hexane layer containing fatty acids (including a large quantity of linoleic acid) was removed by decantation. This fatty acid removal operation was repeated twice, whereby 3.8 g of a yellowish-brown oily substance was obtained. This hexane-insoluble substance included the desired glycosphingolipid, and contained 8% by mass (w/w) of monoglucosylceramide.

### (Working Example 6)

An amount of 200 mL of acetone was added to 5 g of the oily substance obtained in Working Example 5, and the product was stirred and heated in an ultrasound bath to produce a uniform suspension. The liquid mixture was placed in the glass centrifugation tube of a centrifuge machine and allowed to stand overnight in a freezer at a temperature of -20°C. The precipitated pale yellow solid substance was then separated in the centrifuge machine (3000 rpm (revolutions per minute) x 20 minutes). An amount of 1 g of the pale yellow solid separated by centrifugation contained 20% by mass (w/w) of monoglucosylceramide among the desired glycosphingolipids.

The present invention is not limited by the present embodiment. For example, the barley-derived starting material is not limited to raw barley bran, and raw barley may also be used. These barley-derived starting materials may also be finely ground in advance for use.

The barley-derived starting material may also be barley, barley bran, or the like from which fatty acids have been removed (delipidated) in advance. In this case, the present manufacturing method may include a delipidation step for removing fatty acids from the barley-derived starting material prior to the mixing step 1 shown in FIG. 1.

Specifically, the delipidation step performed for the barley-derived starting material prior to the mixing step 1 includes, for example, a step for mixing the barley-derived starting material with hexane or another solvent and stirring the mixture. The amount of fatty acids inherently included in the barley-derived starting material can thereby be reduced in advance, and the amount of solvent and the size of the vessel used in subsequent steps (steps shown in FIG. 1) can thereby be reduced. The present manufacturing method can therefore be made more convenient and inexpensive.

Fatty acids also occur in this case from decomposition and other changes in the oils and fats that are included in the barley-derived starting material, for example, due to heating the starting material mixture in the extraction step 2. Therefore, by performing the abovementioned fatty acid removal step 3 subsequent to the extraction step 2, fatty acids in the extract obtained from the extraction step 2 can be more reliably removed.

## Claims

1. A method for manufacturing a vegetable glycosphingolipid-containing oil, **characterized in** comprising:
an extraction step for mixing a barley-derived starting material with a non-halogenated alcohol-based solvent and heating the starting material mixture; and
a fatty acid removal step for removing fatty acids from an extract obtained in said extraction step.

2. The method for manufacturing a vegetable glycosphingolipid-containing oil of claim 1, **characterized in that** said starting material is heated to 80 to 160°C in said extraction step.

3. The method for manufacturing a vegetable glycosphingolipid-containing oil of claim 1, **characterized in that** said extraction step and fatty acid removal step are performed in the presence of an inert gas.

4. The method for manufacturing a vegetable glycosphingolipid-containing oil of claim 1, **characterized in that** said fatty acid removal step comprises a step for solvent-treating an extract obtained in said extraction step, and then cooling and separating the product.

5. The method for manufacturing a vegetable glycosphingolipid-containing oil of claim 1, **characterized in that** said barley-derived starting material is a barley-bran-derived starting material.

6. The method for manufacturing a vegetable glycosphingolipid-containing oil of claim 1, **characterized in that** said alcohol-based solvent comprises isopropanol or ethanol.

7. The method for manufacturing a vegetable glycosphingolipid-containing oil of claim 4, **characterized in that** said solvent in said fatty acid removal step comprises hexane or acetone.

8. A vegetable glycosphingolipid-containing oil manufactured by the method for manufacturing a vegetable glycosphingolipid-containing oil of claim 1.

9. The vegetable glycosphingolipid-containing oil of claim 8, comprising 8% or more by mass of monoglucosylceramide.

10. The vegetable glycosphingolipid-containing oil of claim 8, comprising 20% or more by mass of monoglucosylceramide.
